# EUROPEAN PATENT APPLICATION

(11) **EP 2 882 081 A1**
(43) Date of publication of application: **10.06.2015**
(21) Application number: 12882018.0
(22) Date of filing: 03.08.2012
(51) Int. Cl.: H02K 5/04, H02K 1/12

(54) **DYNAMO-ELECTRIC MACHINE**

(71) Applicant: Kabushiki Kaisha Yaskawa Denki, Kitakyushu-shi, Fukuoka 806-0004 (JP)
(72) Inventor: YAMAGISHI, Toshiyuki, Kitakyushu-shi Fukuoka 806-0004 (JP); AOKI, Kenichi, Kitakyushu-shi Fukuoka 806-0004 (JP); OKA, Takenori, Kitakyushu-shi Fukuoka 806-0004 (JP); IWAKIRI, Mitsuru, Kitakyushu-shi Fukuoka 806-0004 (JP)
(74) Representative: Viering, Jentschura & Partner Patent- und Rechtsanwälte
(86) International application number: PCT/JP2012/069839
(87) International publication number: WO 2014/020756

(57) **Abstract**

[Problem to be Solved]

To increase rigidity by making an outer diameter of a stator core large relative to a frame.

[Solution]

A rotating electric machine 1 includes a stator core 23 fixed onto an inner periphery of a frame 22, the frame 22 includes a bulged linear part 33 having a shape, the shape extending linearly in an axial direction and bulging toward the inner periphery side on an inner peripheral surface, the stator core 23 includes a groove part 34 fitted to the bulged linear part 33 on an outer peripheral surface. The frame 22 includes a recessed part 32 on an outer periphery for avoiding interference with a mounting bolt 28 that mounts the rotating electric machine 1 onto an object to be driven, and the bulged linear part 33 and the groove part 34 are disposed at positions corresponding to the recessed part 34. The rotating electric machine 1 further includes brackets 21, 25 mounted to axial end parts of the frame 22 and assembling bolts 26 fixing together the frame 22 and the brackets 21, 25, the frame 22 includes bolt holes 31 for the assembling bolts 26, and the bulged linear part 22 and the groove part 24 are disposed at positions corresponding to the assembling bolt holes 31.

## Description

### TECHNICAL FIELD

An embodiment disclosed therein relates to a rotating electric machine.

### BACKGROUND ART

An AC motor having a stator core mounted onto an inner surface of a tubular frame is disclosed in Patent Document 1. This AC motor includes a stator having the stator core, a load-side bracket and an opposite load-side bracket that are respectively mounted onto axial ends of the frame, and a rotor that is rotatably supported on the load-side bracket and the opposite load-side bracket via a bearing. Screw holes are formed in the load-side bracket, the opposite load-side bracket and the frame and the frame is nipped and held by the load-side bracket and the opposite load-side bracket by screws inserted into these screw holes.

### PRIOR ART DOCUMENT

### Patent Document

Patent Document 1: JP, A, 2003-153486

### DISCLOSURE OF THE INVENTION

### Problem to be solved by the Invention

In general, the frame of the motor is made of a material that is high in thermal conductivity, for example, aluminum in order to increase heat dissipation. Aluminum is lower in rigidity than iron that is the material of the stator core and therefore it is necessary to make the outer diameter of the stator core as large as possible relative to the frame.

However, in the above-mentioned prior art motor, the above-described screw holes for through-screws and recessed parts adapted to avoid interference with mounting bolts adapted to mount the motor to an object to be driven are formed in four corners of the approximately square tubular frame. Therefore, when the outer diameter of the stator core is made large, it is feared that the outer periphery of the core may interfere with the above-mentioned screw holes and recessed parts. Accordingly, there was such a problem that the outer diameter of the stator core is restricted and also the rigidity of the motor is subject to the restriction thereof.

The present invention has been made in view of the problem as mentioned above and an object of the present invention is to provide a rotating electric machine capable of increasing the rigidity by making the outer diameter of the stator core larger relative to the frame.

### Means for Solving the Problem

In order to solve the above-mentioned problem, according to an aspect of the present invention, there is provided a rotating electric machine including a tubular frame and a stator core fixed onto an inner periphery of the frame, the frame includes a bulged linear part on an inner peripheral surface, the bulged linear part having a shape extended linearly in an axial direction and bulged toward the inner periphery side, and the stator core includes a groove part fitted to the bulged linear part on an outer peripheral surface.

### Advantages of the Invention

According to the present invention, it is possible to increase the rigidity by making the outer diameter of the stator core larger relative to the frame.

### BRIEF DESCRIPTION OF THE DRAWINGS

Fig. 1 is a perspective view showing a schematic exploded configuration of a rotating electric machine according to the present embodiment.
Fig. 2 is a longitudinal sectional view showing an entire configuration of the rotating electric motor according to the present embodiment.
Fig. 3A is a cross sectional view corresponding to an A-A section in Fig. 2, showing a prior art configuration of a comparative example.
Fig. 3B is a cross sectional view corresponding to the A-A section in Fig. 2, showing a configuration of the present embodiment.
Fig. 4 is an enlarged view of a part B in Fig. 3B.
Fig. 5 is another enlarged view of the part B in Fig. 3B, showing a magnetic flux flow.
Fig. 6 is a cross sectional view in a case where recessed parts are formed in all of the four corners.

### BEST MODE FOR CARRYING OUT THE INVENTION

In the following, the embodiment of the present invention will be described with reference to the drawings.

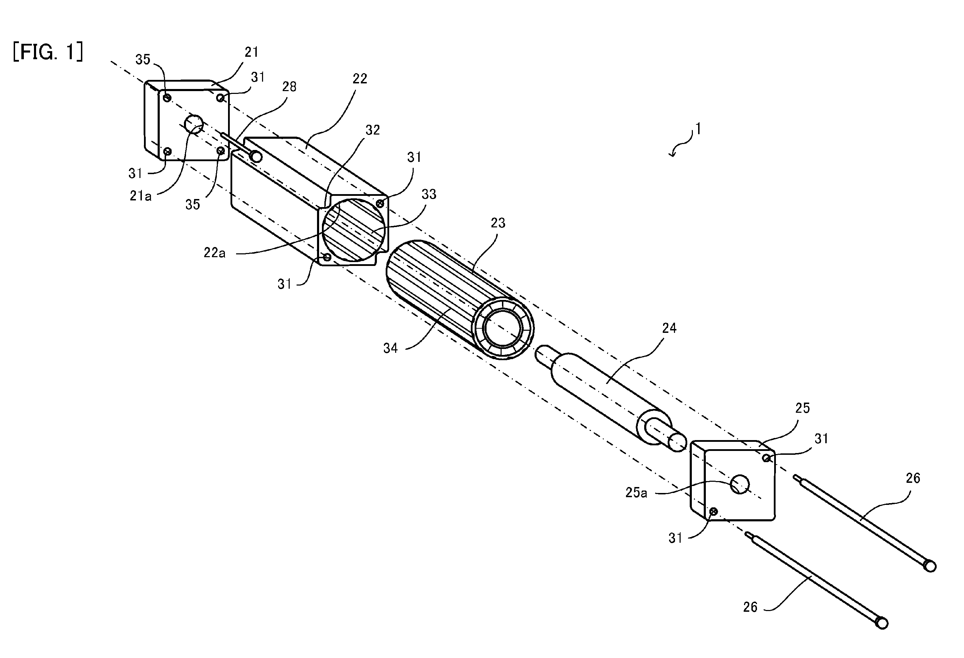

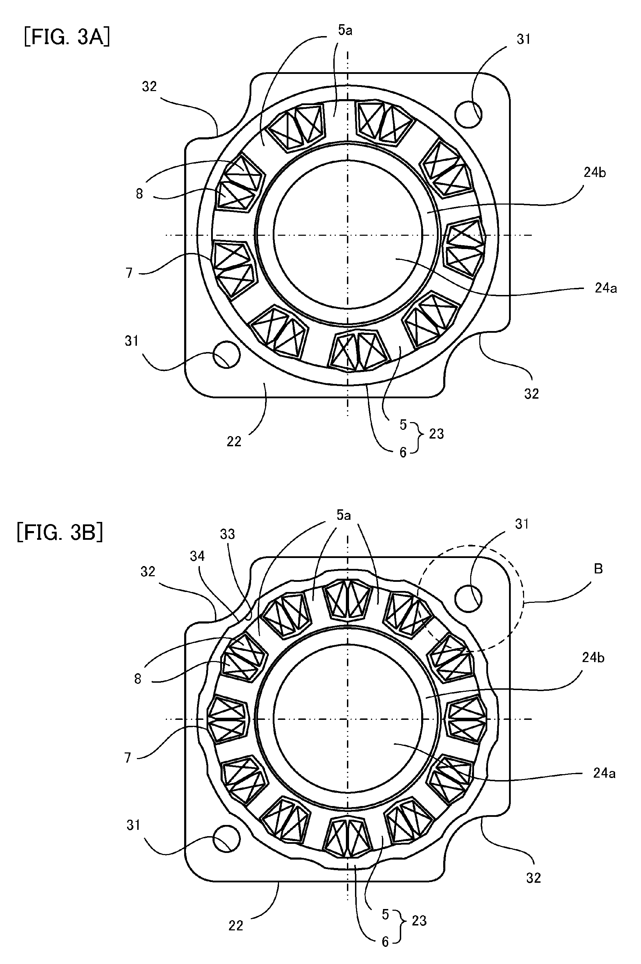

First, a configuration of a rotating electric machine 1 in relation to the present embodiment will be described using Figs. 1 to 3A and 3B. As shown by the schematic exploded diagram in Fig. 1, the rotating electric machine 1 includes an opposite load-side bracket 21, a frame 22, a stator core 23, a rotor 24, a load-side bracket 25 and two mounting bolts 26. A circular fit-in hole 22a is formed through within the approximately square tubular frame 22 along its axial direction, and the approximately cylindrical stator core 23 is to be fixed into that fit-in hole 22a by shrinkage fit or bonding. The approximately cylindrical rotor 24 is inserted into the bore of the stator core 23 with a gap interposed. Then, the both ends of the entire frame 22 with those members included are nipped by the opposite load-side bracket 21 and the load-side bracket 25. Shaft holes 21a, 25a are formed in the respective centers of the opposite load-side bracket 21 and the load-side bracket 25 and only two shafts on the both ends of the rotor 24 are supported passing through the shaft holes 21a, 25a.

Assembling holes 31 are formed through each of the frame 22 and the two brackets 21, 25 along the axial direction on the two corners on a diagonal line viewed in an axially orthogonal section thereof. While the assembling bolt holes 31 in the load-side bracket 25 and the frame 22 are simple through holes, taps are formed on inner peripheries of the assembling bolt holes 31 in the opposite load-side bracket 21. The assembling bolts 26 pass through the assembling bolt holes 31 in the load-side bracket 25 and the frame 22 and are fastened to the taps of the assembling bolt holes 31 in the load-side bracket 21, and thereby the entire rotating electric machine 1 is fixed as one assembly. The rotating electric machine 1 so configured of the present embodiment is an inner-rotor type motor in which the above-mentioned two brackets 21, 25, the frame 22 and the stator core 23 are integrated to configure a stator and the rotor 24 is rotatably provided therein.

In the assembly of the rotating electric machine 1, the shaft on the front side in the drawing (the side that the rotor 24 projects from the load-side bracket 25) in the two shafts on the both ends of the rotor 24 acts as an output shaft to be coupled to the load-side of the object to be driven. In addition, the shaft on the back side (the side that the rotor 24 projects from the opposite load-side bracket 21) acts as a shaft to be coupled to a not shown encoder or the like. In the entire rotating electric machine 1, an end face of the opposite load-side bracket 21 is fixed to a device main body (illustration thereof is omitted) that is the driven object. For this purpose, mounting bolt holes 35 are formed through two corners other than those for the above-mentioned assembling bolt holes 31 viewed in the axially orthogonal section of the opposite load-side bracket 21, and the entire rotating electric machine 1 concerned is fixed to the device main body by making mounting bolts 28 respectively pass through the mounting bolt holes 35 and fastening tip ends thereof to the above-mentioned device main body.

In addition, in a case where the rotating electric machine 1 concerned is rotationally driving the rotor, it is necessary to suppress rotation of the stator caused by reaction torque thereof. For this purpose, in a case of a small-sized motor, the entire stator is formed by an approximately square pole that is approximate to a regular tetragon in its axially orthogonal section such that the rotation thereof may be readily suppressed by nipping and holding the stator by mutually facing two flat plates and so forth. Then, the recessed parts 32 adapted to avoid interference with the mounting bolts 28 are formed in the two corners of the frame 22 corresponding to the assembling bolt holes 31 in the above-described opposite load-side bracket 21 along the entire axial direction of the frame 22 concerned.

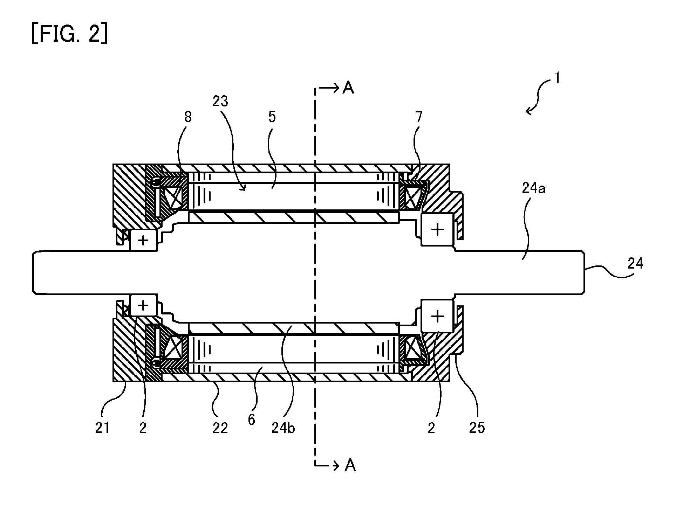

An inner structure of the rotating electric machine 1 concerned will be described with reference to Fig. 2 that is an axial sectional diagram of the rotating electric machine 1 and Figs. 3A and 3B that are axially orthogonal sectional diagrams of the rotating electric machine 1. Incidentally, Fig. 3A shows the inner structure in a case of prior arts as a comparative example and Fig. 3B shows the inner structure in a case of the present embodiment. In Fig. 2, Fig. 3A and Fig. 3B, the rotor 24 has a shaft 24a that is a central shaft and an approximately cylindrical permanent magnet 24b that is disposed on an outer peripheral side face at an axial central position thereof. Bearings 2 are respectively disposed on the opposite load-side bracket 21 (on the left side in Fig. 2) and the load-side bracket 25 (on the right side in Fig. 2) and these bearings 2 rotatably support the both end shafts of the shaft 24a.

The stator core 23 that is fitted into the bore of the frame 22 has an approximately cylindrical laminated iron core body 5 that faces an outer peripheral surface of the rotor 24 in a radial direction with the gap interposed, an approximately cylindrical yoke part 6 that is located between the outer periphery side of this laminated iron core body 5 and the inner peripheral surface of the frame 22 and has been divided from the laminated iron core 5 in the radial direction, a bobbin 7 that is mounted onto the laminated iron core body 5, and a coil wire 8 that is wound around the bobbin 7. The bobbin 7 is made of an insulating material in order to electrically insulate the laminated iron core body 5 from the coil wire 8. The laminated iron core body 5 includes a plurality of projected teeth parts 5a which has inner peripheral-side cylindrical tip end parts coupled together and which radially projects outward in the radial direction. The respective teeth parts 5a are disposed in a circumferential direction at equal intervals and the bobbins 7 with the coil wires 8 wound therearound are mounted onto the teeth parts 5a. A resin is injected into spaces between the bobbins 7 and between the coil wires 8 located between the respective teeth parts 5a and thereby the entire stator core 23 is mold-fixed.

Incidentally, the assembling bolt 26 corresponds to a fixing bolt described in each claim, the mounting bolt 28 corresponds to a mounting bolt described in each claim, and the assembling bolt hole corresponds to a bolt hole for the fixing bolt described in each claim.

In the stator core 23 so configured, when a current is made to flow through the coil wire 8 of each bobbin 7, the corresponding teeth part 5a is magnetized and works as a magnetic pole. The polarities and field system intensities of the magnetic poles of the respective teeth parts 5a are sequentially switched to impart circumferential attractive force and repulsive force to a magnetic pole that has been magnetized to the permanent magnet 24b on the outer periphery of the rotor 24, thereby generating rotating torque in the rotor 24 consequently. In the rotating electric machine 1 of the present embodiment, the adjacent three teeth parts 5a are respectively connected to a three-phase AC source to function as an AC motor all together. Therefore, the teeth parts 5a to be disposed on the stator core 23 are disposed by the number of a multiple of 3.

Fig. 3A shows a prior art configuration in a case where nine teeth parts 5a are disposed and six magnetic poles are disposed on the permanent magnet 24b of the rotor 24. In the following, such a field system magnetic pole on the stator side, that is, the teeth part 5a will be referred to as a slot and the magnetic pole on the rotor side, that is, the magnetic pole that has been magnetized to the permanent magnet of the rotor 24 will be referred to as a pole. Then, in the configuration of the example shown in Fig. 3A, it is the configuration that six poles and nine slots are disposed and therefore it will be denoted as the form of "6P9S". In addition, in the prior art configuration of the example shown in Fig. 3A, the outer peripheral shape of the stator core 23, that is, the outer peripheral shape of the yoke part 6 located on the outermost peripheral part exhibits a perfect circular cylindrical shape. In this case, though not shown in the drawing in particular, whirl stopping of the stator core 23 in the frame 22 has been performed by machining a drilled hole that passes through in the radial direction in the frame 22 and the stator core 23 and press-fitting a pin into the drilled hole.

In contrast, in the rotating electric machine 1 of the present embodiment, as shown in Fig. 3B, a plurality of bulged linear parts 33 of the shape that linearly extends in the axial direction and bulges toward the inner periphery side is formed on an inner peripheral surface of the frame 22 and groove parts 34 to be brought into fitting on the bulged linear parts 33 are formed on an outer peripheral surface of the stator core 23 (see the above-mentioned Fig. 1, in addition). It is possible to prevent idling in the frame 22 by engagement of the bulged linear parts 33 with the groove parts 34 even in a case where strong reaction torque is produced in the stator core 23. In addition, when the stator is to be assembled, it is possible to readily assemble the stator simply by aligning together circumferential positions of each bulged linear part 33 and each groove part 34 that correspond to each other and fitting the stator core 23 into the bore of the frame 22 and shrinkage-fitting and bonding them together. As a result, since the pin as the dedicated component is no longer needed and drilled hole machining and the pin press-fitting process are no longer needed, it is possible to improve the productivity of the rotating electric machine 1 in comparison with the case of the above-mentioned prior art configuration.

In addition, the frame 22 of the rotating electric machine 1 that is generally used as the motor is made of a material of quality that is high in thermal conductivity in order to increase heat dissipation and is a non-magnetic body in order not to leak lines of magnetic force, for example, aluminum. On the other hand, the laminated iron core body 5 and the yoke part 6 of the stator core 23 are made of iron that is a magnetic body. Since aluminum is lower in rigidity than iron that is the material of the stator core 23, it is necessary to make the outer diameter of the stator core 23 as large as possible relative to the frame 22 as a design technique for increasing the rigidity of the entire rotating electric machine 1. In contrast, in the prior art configuration shown in Fig. 3A, when the outer diameter of the stator core 23 is made large, it is feared that the outer periphery of the yoke part 6 may interfere with the above-mentioned assembling bolt hole 31 and the above-mentioned recessed part 32. Therefore, there was such a problem that the outer diameter of the stator core 23 is restricted and also the rigidity of the entire rotating electric machine 1 is subject to restriction thereof.

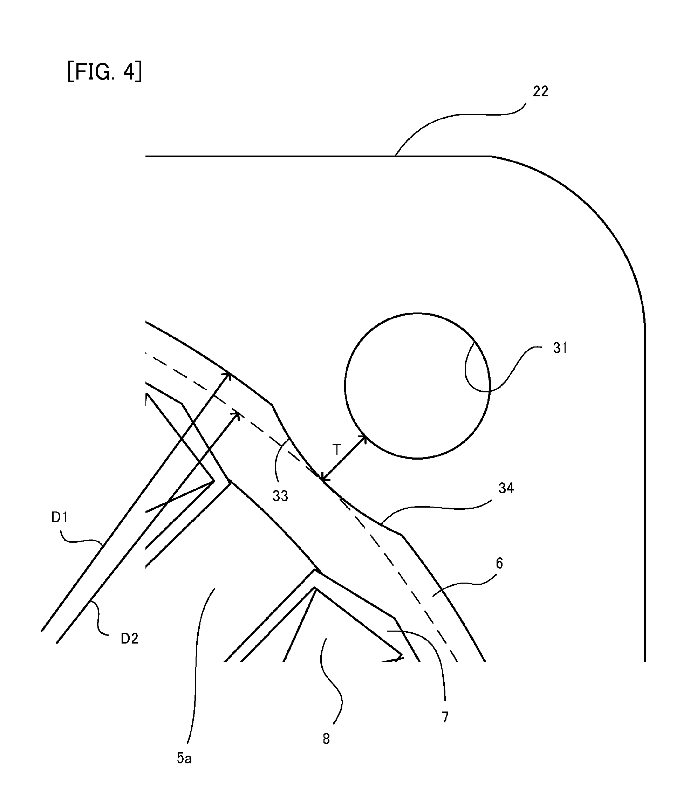

In contrast, in the rotating electric machine 1 of the present embodiment, as shown in Fig. 3B, the bulged linear parts 33 and the groove parts 34 are formed at the circumferential positions corresponding to the above-mentioned assembling bolt holes 31 and the above-mentioned recessed parts 32. As a result, for example, as shown in Fig. 4 that a part B around the assembling bolt hole 31 has been enlarged, even in a case where an outer diameter D1 of the stator core 23 is made large to such an extent that the stator core 23 approaches the assembling bolt hole 31, it is possible to assure a thickness T of the frame 22 in the assembling bolt hole 31 owing to fitting of the bulged linear part 33 into the groove part 34. Accordingly, it becomes possible to make the outer diameter D1 of the stator core 23 large relative to the frame 22 in comparison with an outer diameter D2 of the stator core of the prior art configuration. This is not limited to the assembling bolt hole 31 and the same advantageous effect is obtained also for the above-mentioned recessed part 32 (see Fig. 3B. Detailed illustration thereof is omitted).

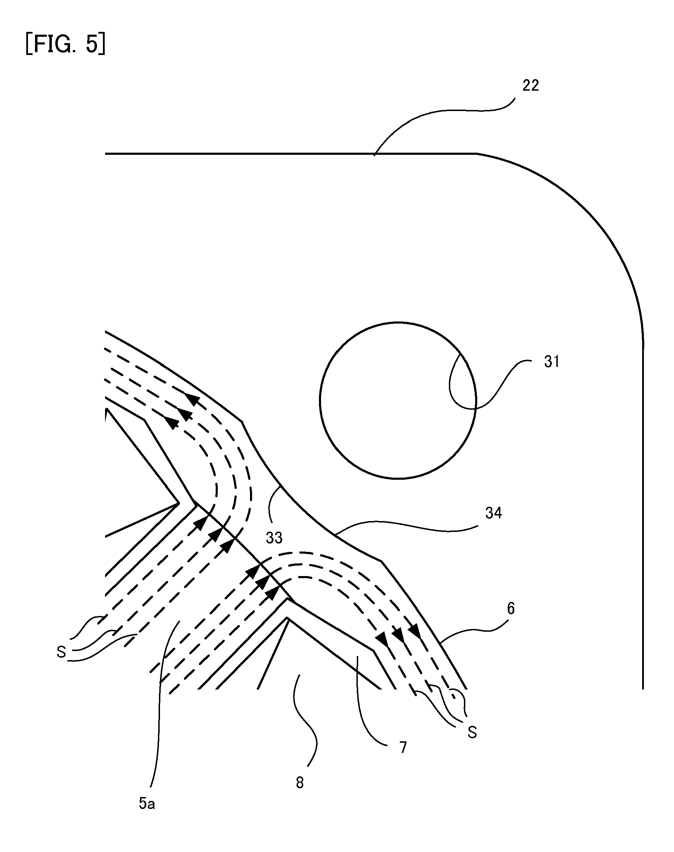

In addition, in the rotating electric machine 1 of the present embodiment, the groove part 34 in the stator core 23 is formed at the circumferential position corresponding to each teeth part 5a on the outer peripheral surface of the yoke part 6. As shown in Fig. 5 that corresponds to the above-mentioned Fig. 4, a magnetic flux S in the stator core 23 is oriented in the approximately radial direction on the teeth part 5a and in the approximately circumferential direction on the yoke part 6. Therefore, at the circumferential position of the yoke part 6 that corresponds to each teeth part 5a, the magnetic flux S that flows from the teeth part 5a in the approximately radial direction changes its orientation so as to expand toward the left and right both sides in the circumferential direction, and the magnetic flux density on the outer periphery side at the position concerned of the yoke part 6 is reduced in comparison with that of other parts. Therefore, it is possible to reduce the influence on the magnetic flux S and to suppress a reduction in electromagnetic characteristic of the rotating electric machine 1 by forming the groove part 34 at the position concerned (the circumferential position corresponding to the teeth part 5a on the outer peripheral surface of the yoke part 6).

As described above, the bulged linear part 33 and the groove part 34 are required to be formed at the circumferential positions respectively corresponding to the assembling bolt hole 31 or the recessed part 32 on the outer periphery side thereof and the teeth part 5a on the inner periphery side thereof. Then, since the frame 22 is formed into the approximately regular tetragon in its axially orthogonal section as described above, it is common that the assembling bolt holes 31 to be formed in two places or the recessed parts 32 to be formed in two places are mutually arranged on the diagonal line of the above-mentioned approximately regular tetragon. Therefore, it is preferable that the bulged linear parts 33 and the groove parts 34 be formed at intervals of 180 degrees or at intervals of 90 degrees in the circumferential direction so as to make their positions correspond to the circumferential positions of the assembling bolt holes 31 or the recessed parts 32 on the outer periphery side.

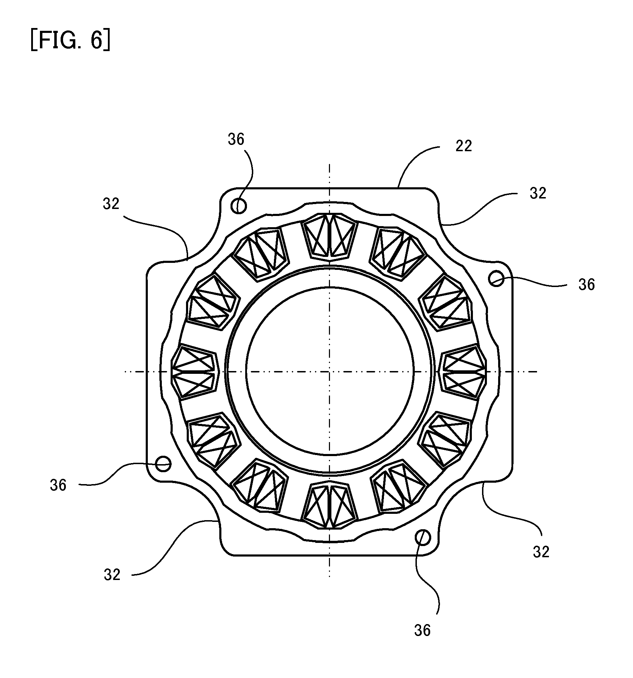

In the rotating electric machine 1 of the present embodiment, as shown in Fig. 3B, since the assembling bolt holes 31 and the recessed parts 32 are disposed respectively on the four corners in the approximately regular tetragon section of the frame 22, the bulged linear parts 33 and the groove parts 34 are arranged on four places that are located at intervals of 90 degrees in the circumferential direction and where the bulged linear parts 33 and the groove parts 34 correspond to both of them. Further, in the rotating electric machine 1 of the present embodiment, in order to obtain a whirl stopping function of the stator core 23 at the highest level, the bulged linear parts 33 and the groove parts 34 are arranged at circumferential positions corresponding to all of the teeth parts 5a. However, in a case of a configuration that in a combination with one of the assembling bolt hole 31 and the recessed part 32, the assembling bolt holes 31 or the recessed parts 32 are arranged only on the two corners on the diagonal line, the bulged linear parts 33 and the groove parts 34 may be simply arranged on at least two places that are located at intervals of 180 degrees in the circumferential direction (illustration is omitted). In addition, in a case of the large-sized rotating electric machine 1, there are cases when the recessed parts 32 are arranged on four places and the assembling bolt holes 36 that are sufficiently small in hole diameter are arranged near the respective recessed parts 32 as shown in Fig. 6. In this case, the bulged linear parts 33 and the groove parts 34 may be arranged at intervals of 90 degrees in the circumferential direction at circumferential positions corresponding to the recessed parts 32 that are arranged at least on four places.

Then, in the rotating electric machine 1 of the present embodiment, also an arrangement configuration of the teeth parts 5a on the inner peripheral side is modified by making the positions of the teeth parts 5a correspond to the circumferential positions of the above-mentioned assembling bolt holes 31 and recessed parts 32. As described above, in a case where the rotating electric machine 1 concerned is to be used as the AC three-phase motor, the number of slots of the stator core 23 (that is, the number of the teeth parts 5a) amounts to a multiple of 3 and it is necessary to arrange the teeth parts 5a at equal intervals in the circumferential direction. On the other hand, in a case where the bulged linear parts 33 and the groove parts 34 are to be arranged at intervals of 180 degrees, it is necessary to set the number of slots to a multiple of 2 and in a case where the bulged linear parts 33 and the groove parts 34 are to be arranged at intervals of 90 degrees, it is necessary to set the number of slots to a multiple of 4. Therefore, it becomes possible to arrange the bulged linear parts 33 and the groove parts 34 to be formed at the circumferential positions corresponding to the teeth parts 5a at intervals of 180 degrees by setting the number of slot to a multiple of 6 (= 3 x 2), and it becomes possible to arrange the bulged linear parts 33 and the groove parts 34 at intervals of 90 degrees by setting the number of slots to a multiple of 12 (= 3 x 4).

It is possible to functionally arrange the bulged linear parts 33 and the groove parts 34 by applying the present invention to the form of 10P12S such as the example of the present embodiment shown in Fig. 3B and to the forms for the large-sized AC motors such as 20P24S, 30P36S and so forth that are not illustrated in particular on the basis of the above-mentioned technique. Incidentally, in the form of 6P9S as shown in Fig. 3A, in a case where one teeth part 5a is arranged corresponding to one (the upper left-side recessed part 32 in the illustrated example) of the assembling bolt hole 31 and the recessed part 32, the other teeth parts 5a do not match the remaining three assembling bolt holes 31 and recessed parts 32 at the circumferential positions. Therefore, on these three places, it is impossible to obtain the effect of assuring the thickness of the frame 22 owing to provision of the bulged linear parts 33 and the groove parts 34.

According to the above-mentioned embodiment of the present invention, such advantageous effects as follows are obtained. That is, the bulged linear parts 33 of the shape that linearly extends in the axial direction and bulges toward the inner periphery side are formed on the inner peripheral surface of the frame 22 and the groove parts 34 that come into fitting on the bulged linear parts 33 are formed on the outer peripheral surface of the stator core 23. It is possible to readily attain whirl stopping of the frame 22 and the stator core 23 by fitting of the bulged linear parts 33 into the groove parts 34. As a result, since the pin is no longer needed and the drilled hole machining and the pin press-fitting process are no longer needed, it is possible to improve the productivity of the rotating electric machine 1.

In addition, by arranging these bulged linear parts 33 and groove parts 34 at the positions corresponding to the assembling bolt holes 31 and the recessed parts 32, it becomes possible to assure the thickness of the frame 22 in the assembling bolt holes 31 and the recessed parts 32 owing to fitting of the bulged linear parts 33 into the groove parts 34, even in a case where the outer diameter of the stator core 23 is made large to such an extent that it interferes with the assembling bolt holes 31 and the recessed parts 32. As a result, since it become possible to make the outer diameter of the stator core 23 larger relative to the frame 22, it is possible to increase the rigidity of the rotating electric machine 1.

In addition, in the present embodiment, in particular, it is possible to arrange the bulged linear parts 33 and the groove parts 34 at the positions corresponding to the assembling bolt holes 31 and the recessed parts 32, by forming the bulged linear parts 33 and the groove parts 34 in the rotation direction respectively on the inner peripheral surface of the frame 22 and the outer peripheral surface of the stator core 23 at intervals of 180 degrees or at intervals of 90 degrees.

In addition, in the present embodiment, in particular, since the bulged linear parts 33 and the groove parts 34 are formed at the positions corresponding to the recessed parts 32, it is possible to assure the thickness of the frame 22 in the recessed parts 32 owing to fitting of the bulged linear parts 33 into the groove parts 34 even in a case where the outer diameter of the stator core 23 is made large to such an extent that it interferes with the recessed parts 32. Therefore, since it becomes possible to make the outer diameter of the stator core 23 larger relative to the frame 22, it is possible to increase the rigidity of the rotating electric machine 1.

In addition, in the present embodiment, in particular, since the bulged linear parts 33 and the groove parts 34 are formed at the positions corresponding to the assembling bolt holes 31, it is possible to assure the thickness of the frame 22 in the assembling bolt holes 31 owing to fitting of the bulged linear parts 33 into the groove parts 34 even in a case where the outer diameter of the stator core 23 is made large to such an extent that it interferes with the assembling bolt holes 31. Therefore, since it becomes possible to make the outer diameter of the stator core 23 larger relative to the frame 22, it is possible to increase the rigidity of the rotating electric machine 1.

In addition, in the present embodiment, in particular, it is possible to reduce the influence on the magnetic flux and to suppress a reduction in motor characteristic, by forming the groove parts 34 in the stator core 23 at the positions corresponding to the teeth parts 5a on the outer peripheral surface of the yoke part 6.

In addition, in the present embodiment, in particular, it becomes possible to arrange the bulged linear parts 33 and the groove parts 34 to be formed at the positions corresponding to the teeth parts 5a at intervals of 180 degrees, by setting the number of slots to a multiple of 6 (= 3 x 2), and it becomes possible to arrange the bulged linear parts 33 and the groove parts 34 at intervals of 90 degrees, by setting the number of slots to a multiple of 12 (= 3 x 4). As a result, it becomes possible to arrange the bulged linear parts 33 and the groove parts 34 at the positions corresponding to the assembling bolt holes 31 and the recessed parts 32.

In addition, although the stator core configured to divide the cylindrical yoke from the teeth that are disposed to project toward the inner periphery side of the yoke concerned and the tip ends of which are coupled has been illustrated, the present invention is not limited to this and even the stator core of a configuration that the yoke and the teeth are coupled together and the yoke is divided in the circumferential direction may be used.

Although, in the foregoing, the case where the rotating electric machine is the motor has been described by way of example, the present embodiment is also applicable to a case where the rotating electric machine is a generator.

In addition, the techniques brought about by the above-mentioned embodiment and respective modified examples may be utilized by appropriately combining them in addition to the already described configurations.

Besides, though not illustrated one by one, the present embodiment is to be implemented by being modified in a variety of ways within a range not deviating from the gist thereof.

### DESCRIPTION OF SYMBOLS

- 1: rotating electric machine
- 5: laminated iron core body
- 5a: teeth part
- 6: yoke part
- 7: bobbin
- 8: coil wire
- 21: opposite load-side bracket
- 22: frame
- 23: stator core
- 24: rotor
- 25: load-side bracket
- 26: assembling bolt (fixing bolt)
- 28: mounting bolt (mounting bolt)
- 31: assembling bolt hole (bolt hole for fixing bolt)
- 32: recessed part
- 33: bulged linear part
- 34: groove part
- 35: mounting bolt hole
- 36: assembling bolt hole

## Claims

1. A rotating electric machine comprising:
a tubular frame; and
a stator core fixed onto an inner periphery of the frame; wherein
the frame includes a bulged linear part on an inner peripheral surface, the bulged linear part having a shape extended linearly in an axial direction and bulged toward the inner periphery side, and
the stator core includes a groove part fitted to the bulged linear part on an outer peripheral surface.

2. The rotating electric machine according to claim 1, wherein
the bulged linear part and the groove part are disposed at intervals of 180 degrees or at intervals of 90 degrees in a rotation direction of a rotor.

3. The rotating electric machine according to claim 1 or 2, wherein
the frame includes a recessed part on an outer periphery for avoiding interference with a mounting bolt to mount the rotating electric machine onto an object to be driven, and
the bulged linear part and the groove part are disposed at a position corresponding to the recessed part.

4. The rotating electric machine according to any one of claims 1 to 3, further comprising:
a bracket mounted to axial end part of the frame; and
a fixing bolt fixing together the frame and the bracket, wherein
the frame includes a bolt hole for the fixing bolt, and
the bulged linear part and the groove part are disposed at a position corresponding to the bolt hole.

5. The rotating electric machine according to any one of claims 1 to 4, wherein
the stator core includes
a cylindrical yoke part, and
a plurality of teeth parts disposed on an inner periphery of the yoke part so as to be projected toward the inner periphery side, each of the plurality of teeth parts around which a stator coil is wound, and
the groove part is disposed at a position corresponding to at least one of the plurality of teeth parts on an outer peripheral surface of the yoke.

6. The rotating electric machine according to claim 5, wherein
a number of slots of the stator core is a multiple of 6 or a multiple of 12.
